# EUROPEAN PATENT APPLICATION

(11) **EP 0 470 267 A1**
(43) Date of publication of application: **12.02.1992**
(21) Application number: 91904649.0
(22) Date of filing: 26.02.1991
(51) Int. Cl.: G06F 15/20

(54) **DOCUMENT PREPARING DEVICE**

(30) Priority: 26.02.1990 JP 44902/90
(71) Applicant: MATSUSHITA ELECTRIC INDUSTRIAL CO., LTD., Kadoma-shi, Osaka-fu, 571 (JP)
(72) Inventor: KISHIHATA, Hideyuki, Yokohama-shi, Kanagawa 227 (JP)
(74) Representative: Sorrell, Terence Gordon
(86) International application number: JP9100247
(87) International publication number: WO9113408

(57) **Abstract**

A document preparing device by which plural kinds of item numbers for the next itemized document are generated and selection therefrom is possible. The device is so configured that when preparing an itemized document, the candidates of the item numbers to be given nextly are generated referring the item number just before the one being indicated by a cursor, and then one of the candidates is selected by the operator.

## Description

### TECHNICAL FIELD

This invention relates to a document forming device for use in a Japanese-language word processor or the like.

### BACKGROUND ART

In document forming devices of this type, the operator moves a cursor to a position where an input is desired to be made, and inputs an item number at that position, using characters among Chinese characters or English characters.

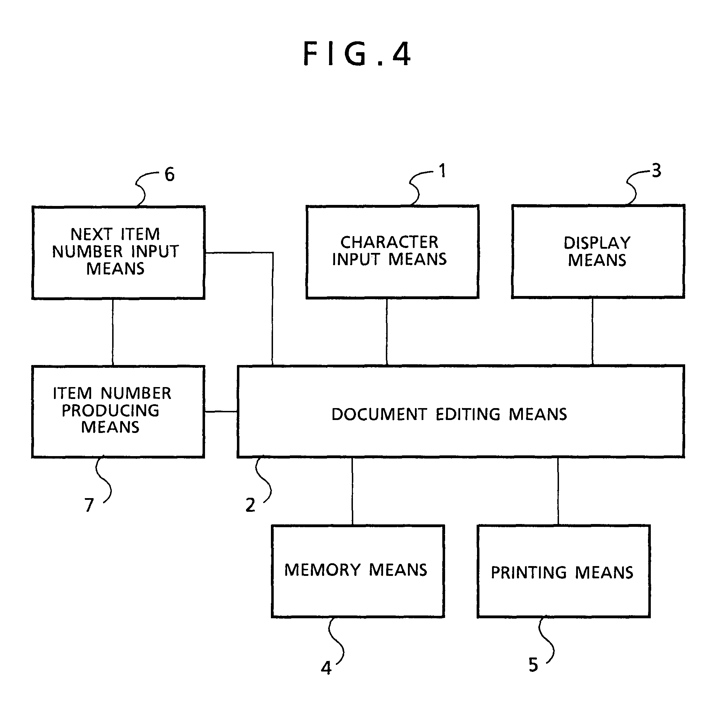

Fig. 4 is a block diagram showing the construction of a already proposed document forming device. When a document is to be formed by this document forming device of Fig. 4, the operator operates a character input means 1 to input Japanese syllable characters, Chinese characters, English characters, numerals and so on, and the proofreading and editing of a train of such inputted characters found on a display means 3 are effected by a document editing means 2.

The document thus formed is stored in a memory means 4, and a necessary document is printed and outputted by a printing means 5.

When itemized sentences, such as (1) ..., (2) ..., (3) ..., are to be formed when inputting and editing the document, (1), (2) and (3) are inputted, using ordinary characters, or are inputted using a next item number input means 6 and an item number producing means 7.

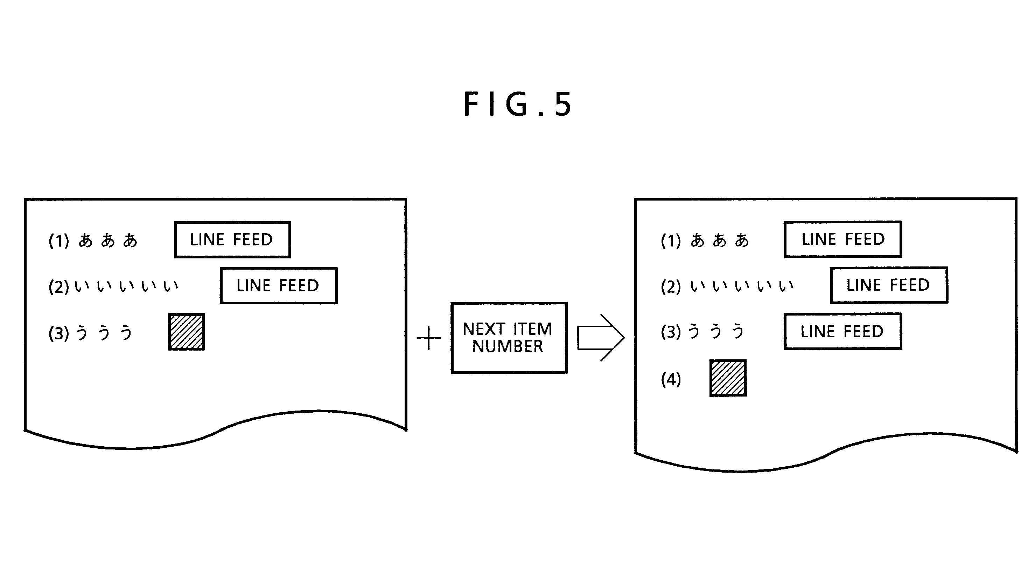

Next, a specific example of the addition of the next item to the last item of the itemized sentences will now be explained with reference to Fig. 5.

Estimating that the operator has operated the character input means 1 to input the item 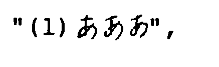 the item 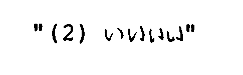 and the item 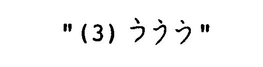 of the itemization shown in Fig. 5, the cursor is positioned at the end of the item "(3)", that is, at a location indicated by oblique lines in this Figure.

When an item "(4)" is to be inputted as the next item of the itemization below the item 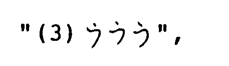 the operator usually inputs a "line feed" control code after 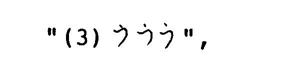 and then inputs "(4)".

In the apparatus provided with the next item number input means 6 capable of easily inputting the next item number, the item number producing means 7 of the device produces a "line feed" control code and the next item number "(4)" merely by inputting a "next item number" key through the next item number input means 6, so that there is obtained the same result as when inputting them separately.

However, in the above-mentioned document forming device, with respect to the kind of item number to be produced upon depression of the next item number key, based on the item number immediately preceding the inputting of the next item number, for example, based on the last item number "(3)", the next item number "(4)" of the same kind is produced. Therefore, there has been encountered a problem that with the conventional item number producing means 7, an item number "(a)" of a different kind can not be inputted.

This invention is devised to solve such a conventional problem, and an object thereof is to provide an excellent document forming device which can produce not only an item number of the same kind as that of an immediately-preceding item number but also item numbers different in kind from the immediately-preceding item number, and when the item number to be inputted is different in kind from the immediately-preceding item number, it can be set as an item number of a kind selected among other kinds of item numbers.

### DISCLOSURE OF THE INVENTION

In the present invention, in order to achieve the above object, there are provided an item number candidate producing means for producing not only an item number of the same kind as that of an immediately-preceding item number but also item numbers different in kind from the immediately-preceding item number, and an item number selecting means for selecting a desired one among the item number candidates produced by this item number candidate producing means. When forming an itemized sentence, item number candidates to be applied next are produced based on the item number before the cursor position, and the operator selects one among them.

Therefore, according to the present invention, when forming the itemized sentences, a plurality of kinds of next item number candidates are produced, and a desired item number is selected and is offered to the operator, and therefore there is provided the effect that the item numbers to be used when forming the document can be easily inputted sequentially.

### BRIEF DESCRIPTION OF THE DRAWINGS

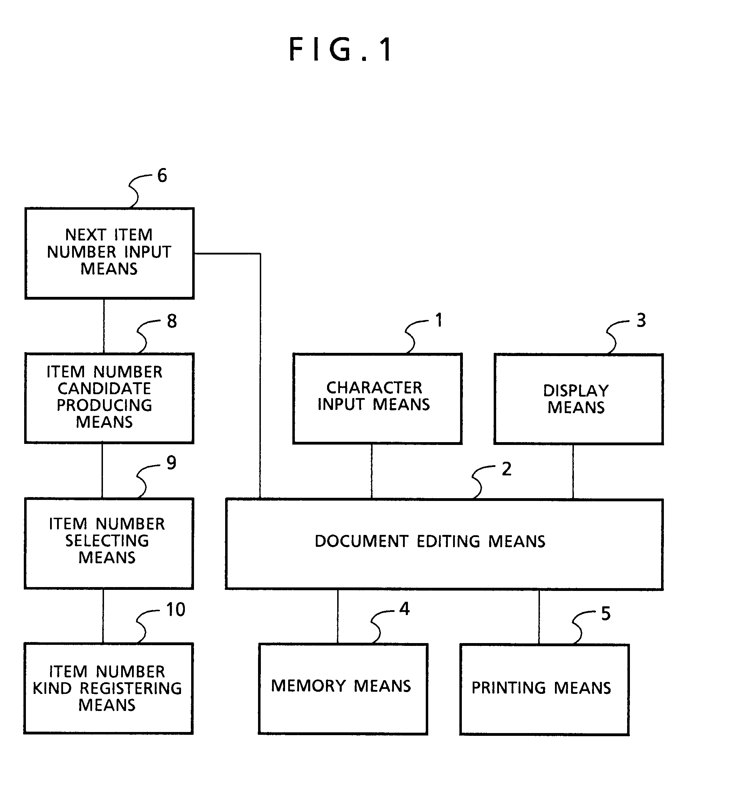

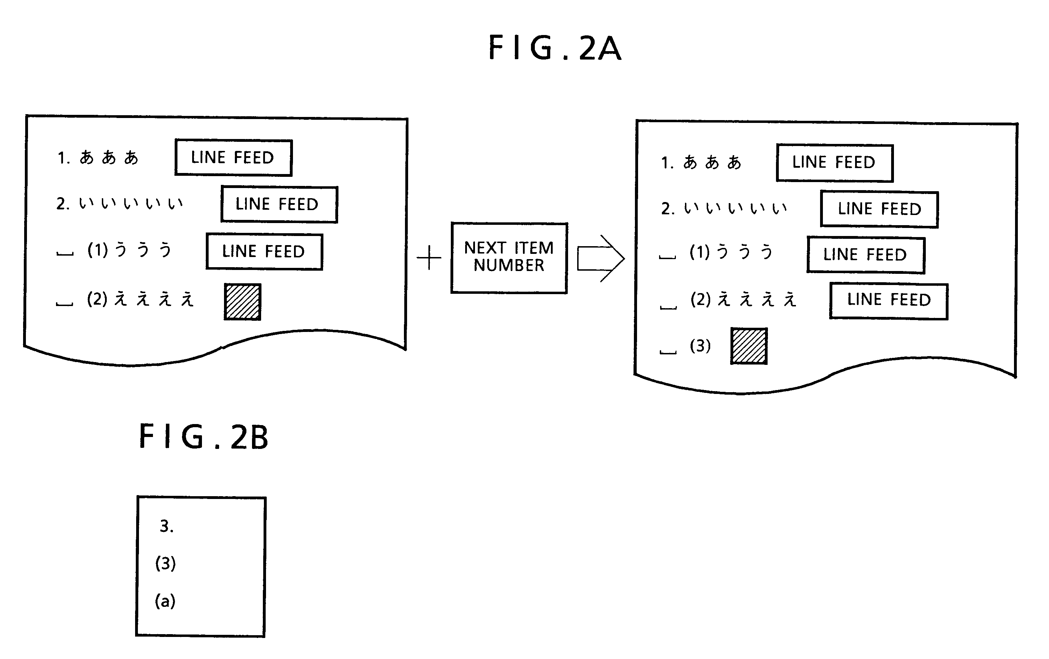

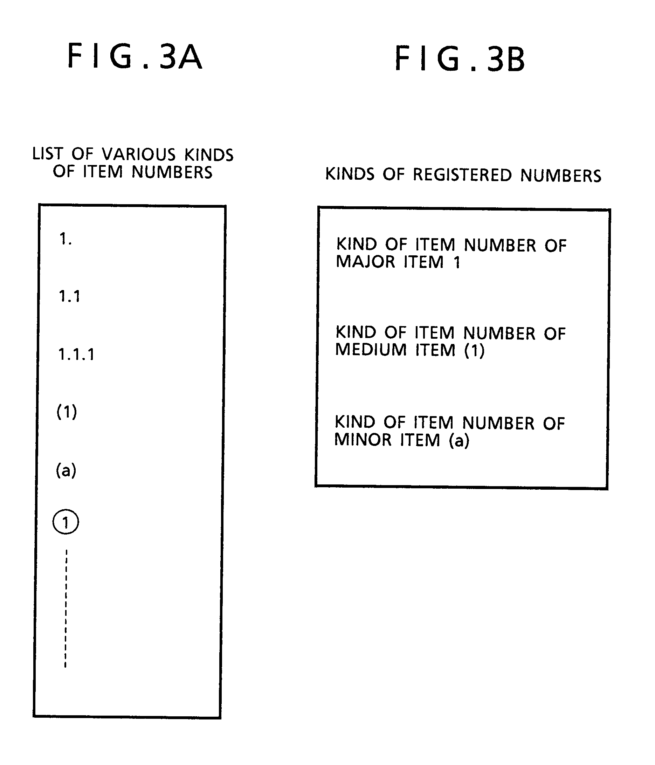

Fig. 1 is a schematic block diagram showing one embodiment of a document forming device of the present invention; Fig. 2(a) is a view explaining the formation of an itemized document by the above device; Fig. 2(b) is a view explaining item number candidates selected by an item number selecting means of the above device and displayed by a display means; Fig. 3(a) is a view explaining of a list of various kinds of item numbers produced by an item number candidate producing means of the above device; Fig. 3(b) is a view explaining the kinds of registered item numbers in the above device; Fig. 4 is a schematic block diagram of the conventional document forming device; and Fig. 5 is a view explaining the formation of an itemized document by the conventional document forming device.

### BEST MODE FOR CARRYING OUT THE INVENTION

Fig. 1 is a block diagram showing a general construction of one embodiment of the present invention.

In Fig. 1, 1 denotes a character input means by which the operator inputs Japanese syllable characters, Chinese Characters, English characters, numerals and so on. 2 denotes a document editing means which proofreads and edits a train of inputted characters, such as Japanese syllable characters, Chinese characters, English characters, numerals an so on, inputted from the character input means 1, while displaying these characters with a display means 3.

4 denotes a memory means for storing a document formed by the document editing means 2, and 5 denotes a printing means for printing and outputting the document formed by the document editing means 2.

6 denotes a next item number input means which indicates the inputting of the next item number when forming itemized sentences such as (1) ..., (2) ..., (3) .... by the above document editing means 2. 8 denotes an item number candidate producing means for producing all item number candidates which can be subsequently applied based on the item number before the cursor position.

Examples of item number candidates produced by this item number candidate producing means 8 are shown in Fig. 3(a).

As shown in Fig. 3(a), there are many numerals and combinations thereof that can be used as item numbers, such as "1.", "1. 1 ", "1. 1. 1 ", "(1)", "(a)-" and ". Among these, the kinds of item numbers used in the document formed by the operator are, for example, a major item "1.", a medium item "(1)" and a minor item "(a)" from the list of various kinds of item numbers shown in Fig. 3(a).

9 denotes an item number selecting means which causes the item numbers, produced by the item number candidate producing means 8, to be displayed in the display means 3, and enables the operator to select a desired one among the displayed item numbers. 10 denotes means which beforehand designates and stores the kinds of item numbers to be used by the operator in the formation of the document, so that the kinds of item numbers produced by the item number candidate producing means 8 can be set with the contents desired by the operator.

Fig. 3(b) shows an example of item number kinds registered by the item number kind registering means 10. The operator designates the item numbers among the list of various kinds of item numbers shown in Fig. 3(a), and registers, for example, the above-mentioned major item "1.", the medium item "(1)" and the minor item "(a)".

Next, the operation of the above embodiment will now be explained with reference to Fig. 2(a) and Fig. 2(b).

Fig. 2(a) shows an example of document containing itemized sentences, and in this document, a major item 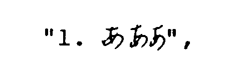 a major item 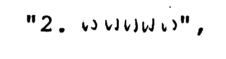 and a medium item 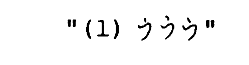 and a medium item 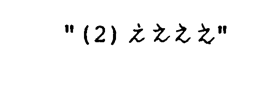 of the above large item

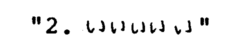

have already been inputted to the document editing means 2 through the operation of the character input means 1 by the operator.

In this document the cursor is positioned at the end of the medium item 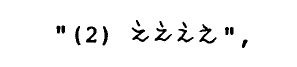 as indicated by oblique lines.

In this case, the candidates that can be considered as the next item number are, for example, three kinds, that is, a medium item "(3)" following the medium item 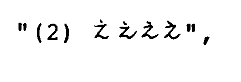 a minor item "(a)" of the medium item 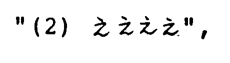 and the next major item (i.e., "(3." following the large item "2."), and therefore the candidate can not be determined definately.

This is because the item number to be inputted next varies depending on the document formed by the operator.

To solve this problem, when a "next item number" key in the next item number input means 6 is depressed, the above three kinds of candidates that can be considered as the next item number are produced by the item number candidate producing means 8, as shown in Fig. 3(a), and the item number selecting means 9 causes the candidates of the major item number "3.", the medium item number "(3)" and the minor item number "(a)-", as shown in Fig. 2(b), to be displayed on the display means 3, and the operator selects one among these candidates through operation of the character input means 1. Therefore, without affecting the feature of the conventional "next item number" key, a "line feed" control code and "the next item number" can be easily inputted.

With respect to the kinds to be produced as the item number candidates, although many kinds may be outputted by the device in a fixed manner, and may be selected, the operator beforehand designates the kinds of item numbers to be used, and registers them in the item number kind registering means 10 in order to effect the formation of the document more efficiently.

There are many numerals and combinations thereof, such as "1.", "1. 1 ", "1. 1. 1 ", "(1)", "(a)" and "", that can be used as the item numbers to be registered in this item number kind registering means 10, and among these, for example, the major item "1.", the medium item "(1)" and the minor item "(a)" are selected and esignated from the list of various kinds of item number shown in Fig. 3(a), and are registered as shown in Fig. 3(b).

By doing so, with respect to the item number candidates produced by "the next item number" key when forming the document, unnecessary ones of the item candidates are not outputted, so that the more efficient document forming device can be achieved.

### CAPABILITY OF EXPLOITATION IN INDUSTRY

As is clear from the above embodiment, in the present invention, when forming the itemized document, a plurality of kinds of item number candidates are produced, and the operator selects one of them, and subsequently all of the item number candidates that can be applied next are produced based on the item number before the cursor position, and can be offered to the operator, so that the a desired item number can be easily inputted, thereby effecting an efficient document formation.

## Claims

1. A document forming device comprising character input means for inputting Japanese syllable characters, Chinese characters, English characters, numerals and so on; display means for displaying a train of characters inputted by said character input means; document editing means for proofreading and editing the train of characters inputted by said character input means; memory means for storing a document edited by said document editing means; printing means for printing said document; next item number input means for indicating the inputting of the next item number when effecting said proofreading and editing of said characters inputted to said document editing means by said character input means; item number candidate producing means for producing candidates that can be considered as said next item number; and item number selecting means for causing the item numbers, produced by said item number candidate producing means, to be displayed in said display means and for enabling the selection of the item number desired by the operator among them.

2. A document forming device according to claim 1, comprising item number kind registering means capable of beforehand registering those kinds of item numbers to be used by the operator.
